# EUROPEAN PATENT APPLICATION

(11) **EP 4 513 124 A1**
(43) Date of publication of application: **26.02.2025**
(21) Application number: 23791633.3
(22) Date of filing: 29.03.2023
(51) Int. Cl.: F28D 20/02, B01J 8/02, B01J 8/06, C01B 7/04, F28F 23/00

(54) **HEATING MEDIUM STORAGE APPARATUS**

(30) Priority: 21.04.2022 JP 2022070208
(71) Applicant: Sumitomo Chemical Company, Limited, Tokyo 103-6020 (JP)
(72) Inventor: HATANO, Ryo, Osaka-shi, Osaka 554-8558 (JP); MIURA, Naoki, Chuo-ku, Tokyo 103-6020 (JP); KINOSHITA, Masahiro, Niihama-shi, Ehime 792-8521 (JP)
(74) Representative: Global IP Europe Patentanwaltskanzlei
(86) International application number: PCT/JP2023/012802
(87) International publication number: WO 2023/203981

(57) **Abstract**

A heat medium storage apparatus 10 including a heat medium tank defining an airtight inside space 22 and a preheating device 30 including a temperature adjusting portion 32 capable of melting the heat medium in solid form, wherein the temperature adjusting portion has a first part 32a and a second part 32b,when the temperature adjusting portion is provided so as to extend in the inside space, the first part is in contact with the heat medium so as to be covered with the heat medium, and the second part is provided so as to protrude into a gap area in which the heat medium is absent in the inside space and thereby the second part is exposed, and when the temperature adjusting portion is provided so as to extend in contact with the outer surface of the heat medium tank, the temperature adjusting portion extends in a contact manner so as to stretch from a first area corresponding to an area in contact with the heat medium in the inside space to a second area corresponding to an area not in contact with the heat medium in the inside space, the areas forming the outer surface of the heat medium tank, the first part being in contact with the first area, the second part being in contact with the second area.

## Description

### TECHNICAL FIELD

The present invention relates to a heat medium storage apparatus for storing a heat medium for adjusting the temperature of a fixed reactor.

### BACKGROUND ART

For example, a production method for producing chlorine by oxidizing hydrogen chloride with oxygen can be performed using a fixed-bed reactor. In such a fixed-bed reactor, a heat medium is used to adjust the temperature of the reactor. When the heat medium is thus used in the fixed-bed reactor, an embodiment is known provided with a heat medium tank collecting and storing the heat medium especially at the time of stopping of a reaction (refer to Patent Document 1).

### RELATED ART DOCUMENTS

### Patent Document

Patent Document 1: JP A 2012-184133

### DISCLOSURE OF INVENTION

### PROBLEM TO BE SOLVED BY THE INVENTION

However, with the embodiment according to Patent Document 1, when the fixed-bed reactor is started up from a standstill to start a certain reaction, for example, there is a risk of damage to the heat medium tank due to expansion of the heat medium in the heat medium tank. Moreover, raising the temperature of the fixed-bed reactor in order to dissolve the solidified heat medium may impair the catalytic activity of a catalyst filled in the reactor. Furthermore, in storing the collected heat medium in the heat medium tank, an embodiment is assumed in which the heat medium is kept in liquid form by continuously heating the heat medium. In this case, for example, massive energy is required only to keep the heat medium in liquid form, or it may be difficult to keep the heat medium in liquid form if it is difficult to secure a power source at the time of a regular inspection.

Therefore, there is a demand for a heat medium storage apparatus that can prevent damage to a heat medium tank when a fixed-bed reactor is started up from a standstill to start a certain reaction and that will not degrade a catalyst filled in the fixed-bed reactor and a fixed-bed reactor comprising the heat medium storage apparatus.

### MEANS FOR SOLVING PROBLEM

The inventors of the present invention have conducted earnest studies in order to solve the above problem to find that the above problem can be solved by a heat medium storage apparatus having a certain configuration and a fixed-bed reactor comprising the heat medium storage apparatus and have completed the present invention.

Therefore, the present invention provides [1] to [9] below.
[1] A heat medium storage apparatus comprising:
   a heat medium tank defining an airtight inside space in which a heat medium having a smaller volume when being in solid form than a volume when being in liquid form is contained; and
   a preheating device comprising a temperature adjusting portion capable of melting the heat medium in solid form contained in the inside space, wherein
   at least the temperature adjusting portion of the preheating device is provided so as to extend in the inside space or being provided so as to extend in contact with an outer surface of the heat medium tank,
   the temperature adjusting portion has a first part and a second part formed continuously and integrally with the first part,
   when the temperature adjusting portion is provided so as to extend in the inside space, the first part is in contact with the heat medium so as to be covered with the heat medium, and the second part is provided so as to protrude into a gap area in which the heat medium is absent in the inside space and thereby the second part is exposed, and
   when the temperature adjusting portion is provided so as to extend in contact with the outer surface of the heat medium tank, the temperature adjusting portion extends in a contact manner so as to stretch from a first area corresponding to an area in contact with the heat medium in the inside space to a second area corresponding to an area not in contact with the heat medium in the inside space, the areas forming the outer surface of the heat medium tank, the first part being provided so as to extend in contact with the first area, the second part being provided so as to extend in contact with the second area.
[2] The heat medium storage apparatus according to above [1], wherein a ratio between a volume of the first part and a volume of the second part is 1:10 to 100:1.
[3] The heat medium storage apparatus according to above [1], wherein the heat medium comprises a molten salt.
[4] The heat medium storage apparatus according to above [3], wherein the molten salt comprises one or two or more selected from the group consisting of potassium nitrate, sodium nitrite, and sodium nitrate.
[5] A fixed-bed reactor comprising the heat medium storage apparatus according to any one of above [1] to [4], wherein
   a temperature of the reactor is adjusted by the heat medium supplied from the heat medium storage apparatus.
[6] The fixed-bed reactor according to above [5], wherein the fixed-bed reactor is a fixed-bed multi-tube reactor.
[7] The fixed-bed reactor according to above [6], wherein the fixed-bed reactor is a fixed-bed reactor configured to produce chlorine from hydrochloric acid.
[8] A method for using the fixed-bed reactor according to above [5], comprising:
   containing the heat medium in liquid form drained from the fixed-bed reactor in the heat medium tank of the heat medium storage apparatus;
   storing the heat medium, the heat medium being contained in the heat medium tank, when the temperature adjusting portion is provided so as to extend in the inside space, such that the first part is in contact with the heat medium so as to be covered with the heat medium and the second part protrudes into the gap area in which the heat medium is absent in the inside space and thereby the second part is exposed, or keeping the heat medium, when the temperature adjusting portion is provided so as to extend in contact with the outer surface of heat medium tank, such that the first part extends in contact with the first area and the second part extends in contact with the second area;
   melting the heat medium in solid form contained in the heat medium tank by functioning the temperature adjusting portion of the preheating device; and
   transferring the melted heat medium in liquid form to the fixed-bed reactor to adjust the temperature of the reactor by the heat medium.
[9] A chlorine producing method for producing chlorine from hydrochloric acid using the fixed-bed reactor according to above [5], comprising:
   containing the heat medium in liquid form drained from the fixed-bed reactor in the heat medium tank of the heat medium storage apparatus;
   storing the heat medium, the heat medium being contained in the heat medium tank, when the temperature adjusting portion is provided so as to extend in the inside space, such that the first part is in contact with the heat medium so as to be covered with the heat medium and the second part protrudes into the gap area in which the heat medium is absent in the inside space and thereby the second part is exposed, or storing the heat medium, when the temperature adjusting portion is provided so as to extend in contact with the outer surface of heat medium tank, such that the first part extends in contact with the first area and the second part extends in contact with the second area;
   storing the heat medium, the heat medium being contained in the heat medium tank, such that the heat medium in solid form covers and is in contact with the first part of the temperature adjusting portion and the second part protrudes into the gap area in which the heat medium in solid form is absent and thereby the second part is exposed;
   melting the heat medium in solid form contained in the heat medium tank by functioning the preheating device; and
   transferring the melted heat medium in liquid form to the fixed-bed reactor to adjust the temperature of the reactor by the heat medium.

### EFFECT OF THE INVENTION

The present invention can provide a heat medium storage apparatus that can prevent damage to a heat medium tank when a fixed-bed reactor is started up from a standstill and that will not degrade a catalyst filled in the fixed-bed reactor and a fixed-bed reactor comprising the heat medium storage apparatus.

### BRIEF DESCRIPTION OF DRAWINGS

FIG. 1 is a schematic diagram transparently showing a configuration of a heat medium storage apparatus according to a first embodiment.
FIG. 2 is a schematic diagram transparently showing a configuration of the heat medium storage apparatus according to a second embodiment.
FIG. 3 is a schematic diagram of a configuration of the heat medium storage apparatus according to a third embodiment.
FIG. 4 is a schematic diagram of a configuration of the heat medium storage apparatus according to a fourth embodiment.
FIG. 5 is a schematic diagram of a configuration of the heat medium storage apparatus according to a fifth embodiment.

### DESCRIPTION OF EMBODIMENTS

The following specifically describes embodiments according to the present invention. The present invention is not limited to the specific embodiments shown below. The drawings only schematically show the shape, the size, and the arrangement of components to the extent that the invention can be understood, and each component can be changed as appropriate without departing from the gist of the present invention. Note that duplicate descriptions may be omitted for similar components indicated by the same symbols in a plurality of drawings.

### 1. Heat Medium Storage Apparatus

A heat medium storage apparatus of the present embodiment is a heat medium storage apparatus comprising:
a heat medium tank defining an airtight inside space in which a heat medium having a smaller volume when being in solid form than a volume when being in liquid form is contained; and
a preheating device comprising a temperature adjusting portion capable of melting the heat medium in solid form contained in the inside space, in which
at least the temperature adjusting portion of the preheating device is provided so as to extend in the inside space or being provided so as to extend in contact with an outer surface of the heat medium tank,
the temperature adjusting portion has a first part and a second part formed continuously and integrally with the first part,
when the temperature adjusting portion is provided so as to extend in the inside space, the first part is in contact with the heat medium so as to be covered with the heat medium, and the second part is provided so as to protrude into a gap area in which the heat medium is absent in the inside space and thereby the second part is exposed, and
when the temperature adjusting portion is provided so as to extend in contact with the outer surface of the heat medium tank, the temperature adjusting portion extends in a contact manner so as to stretch from a first area corresponding to an area in contact with the heat medium in the inside space to a second area corresponding to an area not in contact with the heat medium in the inside space, the areas forming the outer surface of the heat medium tank, the first part being provided so as to extend in contact with the first area, the second part being provided so as to extend in contact with the second area.

The following describes configuration examples of a heat medium storage apparatus of a first embodiment to a fifth embodiment, which are specific embodiments of the heat medium storage apparatus of the present embodiment.

### (i) First Embodiment

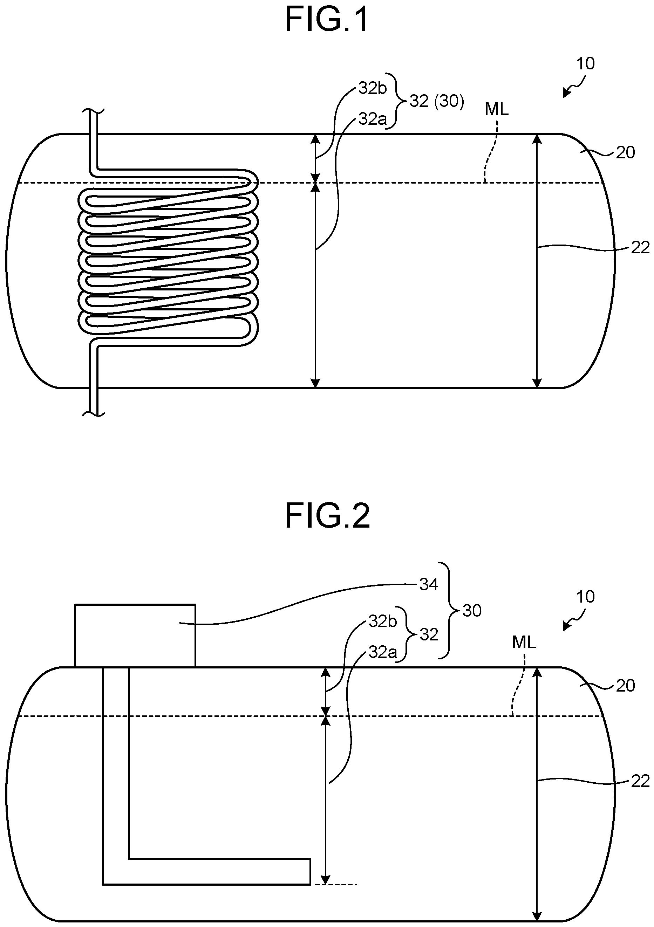

The following describes a configuration of a heat medium storage apparatus 10 according to the first embodiment with reference to FIG. 1. FIG. 1 is a schematic diagram transparently showing the configuration of the heat medium storage apparatus 10 according to the first embodiment.

As shown in FIG. 1, the heat medium storage apparatus 10 of the first embodiment comprises a heat medium tank 20.

The heat medium tank 20 is a (substantially) cylindrical container that can define an airtight inside space 22 that can contain a certain heat medium and store it for a certain period of time.

In the present embodiment, the heat medium tank 20 is disposed such that the height direction of the cylinder matches the horizontal direction. The capacity of the heat medium tank 20 is not limited to a particular capacity, provided that it can contain the heat medium in an amount required by a fixed-bed reactor in which the heat medium storage apparatus 10 is used and can be any suitable capacity. More specifically, the capacity of the heat medium tank 20 may be such that, at the time of stopping of a reactor (the fixed-bed reactor), the heat medium to be collected from the reactor and contained is a maximum level ML set in the heat medium tank 20 or less.

In the shown example of the present embodiment, a description is given assuming that the surface (the liquid level) of the heat medium is present at the position indicated as the maximum level ML (the same applies to the following).

The heat medium tank 20 is preferably formed of, for example, an iron-based material. The iron-based material that can form the heat medium tank 20 may further contain at least one element selected from the group consisting of nickel, chromium, and molybdenum. Specific examples of the iron-based material that can form the heat medium tank 20 may include carbon steel, stainless steel, and hastelloy.

In the present embodiment, for the heat medium, any conventionally known suitable heat medium can be selected and used as appropriate taking into account the reaction temperature of the target reaction, ease of handling of the heat medium, and the like. For example, when the target reaction is an exothermic reaction, the heat medium may be a coolant that can perform adjustment in a direction of cooling the reactor (a reaction tube), whereas when the target reaction is an endothermic reaction, the heat medium may be a heat medium that can perform adjustment in a direction of raising the temperature of the reactor (the reaction tube).

In the present embodiment, examples of a material that can form the heat medium may include: inorganic heat medium containing inorganic substances such as molten salts of potassium nitrate, sodium nitrite, and a mixture thereof, for example, a mixture of 40% by mass of sodium nitrite, 7% by mass of sodium nitrate, and 53% by mass of potassium nitrate, a mixture of 50% by mass of sodium nitrite and 50% by mass of potassium nitrate, and the like; organic heat medium containing organic substances such as alkyl biphenyls, mixtures of biphenyls and diphenyl oxides, mixtures of biphenyls and diphenyl ethers, triphenyls, dibenzyltoluenes, alkyl benzenes, alkyl naphthalenes, and aryl alkyls; ionic liquids; molten metals; and alloys of molten metals.

In the present embodiment, the heat medium that can be stored in the heat medium storage apparatus 10 is assumed to be a heat medium that is in solid form at normal temperature and pressure, that is, during storage, and has a smaller volume in solid form than a volume in liquid form. Such a heat medium preferably contains a molten salt. The molten salt as the heat medium preferably contains one or two or more selected from the group consisting of inorganic substances such as molten salts of potassium nitrate, sodium nitrite, sodium nitrate, and a mixture thereof, for example, a mixture of 40% by mass of sodium nitrite, 7% by mass of sodium nitrate, and 53% by mass of potassium nitrate, a mixture of 50% by mass of sodium nitrite and 50% by mass of potassium nitrate and the like, and more preferably contains one or two or more selected from the group consisting of potassium nitrate, sodium nitrite, and sodium nitrate.

The heat medium storage apparatus 10 comprises a preheating device 30. The preheating device 30 is a functional portion that comes into contact with the heat medium in solid form contained in the inside space 22 of the heat medium tank 20 to adjust its temperature and can thereby melt the heat medium to make it in liquid form.

The preheating device 30 comprises a temperature adjusting portion 32. The temperature adjusting portion 32 is provided so as to extend in the inside space 22 of the heat medium tank 20.

The temperature adjusting portion 32 is a functional portion that can either heat the heat medium or cool the heat medium. More specifically, the temperature adjusting portion 32 comes into direct contact with the heat medium to, for example, conduct the generated heat to the heat medium in solid form contained and stored in the inside space 22 of the heat medium tank 20 and can thereby melt the heat medium in solid form to be in liquid form.

In the present embodiment, the material forming the temperature adjusting portion 32, especially the material of the part that can be in contact with the heat medium is not limited to a particular material, provided that it can ensure durability against the heat medium to be selected and means for making the temperature adjusting portion 32 operable.

The temperature adjusting portion 32 is preferably formed of, for example, an iron-based material. The iron-based material that can form the temperature adjusting portion 32 may further contain at least one element selected from the group consisting of nickel, chromium, and molybdenum. Specific examples of the iron-based material that can form the temperature adjusting portion 32 may include carbon steel, stainless steel, and hastelloy.

The temperature adjusting portion 32 comprises, in this configuration example, a first part 32a, which is covered with and in contact with the heat medium contained in the inside space 22 of the heat medium tank 20, and a second part 32b, which is formed of the same material as that of the first part 32a continuously and integrally therewith and is provided so as to protrude into a gap area in which the heat medium is absent in the inside space 22 and to be exposed.

In the present embodiment, the heat medium storage apparatus 10 may include, in addition to the heat medium tank 20 already described, any other conventionally known suitable components such as, for example, a circulation pump and piping, not shown, for circulating the heat medium.

When being configured in this manner, especially even if the heat medium having a smaller volume when being in solid form than a volume when being in liquid form is used, even if the heat medium having been solidified to be in solid form during storage increases in its volume when being melted to be in liquid form, the second part 32b protrudes into the gap area, and thus pressure that can occur can be released, and consequently damage to the heat medium tank 20, and thus loss of functions of the heat medium storage apparatus 10 can be effectively prevented.

The size, that is, the area, the length, the volume, and the like of the temperature adjusting portion 32 are not limited to particular ones, provided that, for example, the entire amount of the solidified heat medium stored in the heat medium tank 20 can be melted to be in liquid form within a desired time.

The ratio between the volume (the length or the area) of the first part 32a, which is covered with and in contact with the heat medium contained in the inside space 22 of the heat medium tank 20, and the volume (the length or the area) of the second part 32b, which is exposed out of the surface of the heat medium, is not limited to a particular ratio. This ratio is preferably, for example, 10:1 to 100:1, especially when the heat medium is contained up to the assumed maximum level ML.

In the first embodiment, the temperature adjusting portion 32 is composed of piping formed so as to extend in a spiral (coiled) shape in the heat medium tank 20. That is, the temperature adjusting portion 32 of the first embodiment can be formed by any conventionally known suitable what is called vapor coil. The shape, the size (the diameter), and the material of the vapor coil and the type of vapor to be passed through are not limited to particular ones. The shape, the size (the diameter), and the material of the vapor coil and the type of vapor to be passed through may be selected as appropriate in accordance with the heat medium to be used.

The temperature adjusting portion 32, which is the vapor coil, can be introduced into and derived from the heat medium tank 20 in any suitable manner according to the design. In the shown example, the temperature adjusting portion 32 is provided so as to pass through a side face of the cylindrical heat medium tank 20 in the vertical direction, that is, in the up-and-down direction.

In the present embodiment, as the temperature adjusting portion 32, which is the vapor coil, a water vapor (steam) coil is preferably used.

In the present embodiment, the preheating device 30 may include, in addition to the temperature adjusting portion 32 already described, any other conventionally known suitable components such as, for example, a circulation pump and piping, not shown, for circulating the vapor.

### (ii) Second Embodiment

The following describes a configuration of the heat medium storage apparatus 10 according to the second embodiment with reference to FIG. 2. FIG. 2 is a schematic diagram transparently showing the configuration of the heat medium storage apparatus 10 according to the second embodiment. Note that descriptions of the same configurations and requirements as those of the first embodiment already described, such as the heat medium tank 20 and the heat medium, are omitted.

As shown in FIG. 2, the second embodiment is a configuration example in which the preheating device 30 is, for example, an electric heater. As the electric heater, which is the preheating device 30, any conventionally known suitable apparatus corresponding to the heat medium to be used can be used. As the electric heater, for example, a sheathed heater can be used. Example of such an electric heater may include commercially available "tank warming heaters."

The preheating device 30 according to the second embodiment comprises the temperature adjusting portion 32 extending in an L shape in the inside space 22 of the heat medium tank 20 and a controller 34 connected to one end (an upper end) of the temperature adjusting portion 32 and capable of controlling the operation of the temperature adjusting portion 32.

In the shown example, the temperature adjusting portion 32, which is the electric heater, is provided so as to pass through the side face of the cylindrical heat medium tank 20 from the upper side toward the lower side in the vertical direction and protrude into the inside space 22 of the heat medium tank 20. For example, the temperature adjusting portion 32, which is the electric heater, can be formed by any conventionally known suitable heater element such as a thermocouple.

The controller 34 is fixed so as to be placed in contact with the outer surface of the side face of the heat medium tank 20 on the upper side in the vertical direction. The controller 34 may include any conventionally known suitable functional portions such as, for example, a power supply, a leakage circuit breaker, an electromagnetic contactor, and an electronic temperature adjuster.

In the second embodiment, the part of the temperature adjusting portion 32 protruding into the inside space 22 that is positioned closer to the controller 34 (on the upper end side) and exposed to the gap area from the surface (the maximum level ML) of the contained heat medium corresponds to the second part 32b, whereas the part in contact with the heat medium corresponds to the first part 32a.

When the temperature adjusting portion 32 is configured in this manner, especially even if the heat medium having a smaller volume when being in solid form than a volume when being in liquid form is used, even if the heat medium having been solidified to be in solid form during storage increases in its volume when being melted to be in liquid form, the temperature adjusting portion 32 is provided so as to extend across the boundary (the maximum level ML), and thus pressure that can occur can be released, and consequently damage to the heat medium tank 20 can be effectively prevented.

The heat medium storage apparatus 10 of the first embodiment and the second embodiment corresponds to an embodiment in which the temperature adjusting portion 32 is provided so as to extend in the inside space 22, in which the first part 32a is in contact with the heat medium so as to be covered with the heat medium and the second part 32b is provided so as to protrude into the gap area in which the heat medium is absent in the inside space and thereby the second part 32b is exposed.

When the heat medium storage apparatus 10 is configured in this manner, the heat medium can be brought into direct contact with the first part 32a of the temperature adjusting portion 32 comprised in the preheating device 30, and thus in addition to the effects already described, for example, the time from the startup of the preheating device 30 to the start of temperature adjustment of the reactor, and thus the time to the start of the reaction by the reactor can be effectively reduced.

### (iii) Third Embodiment

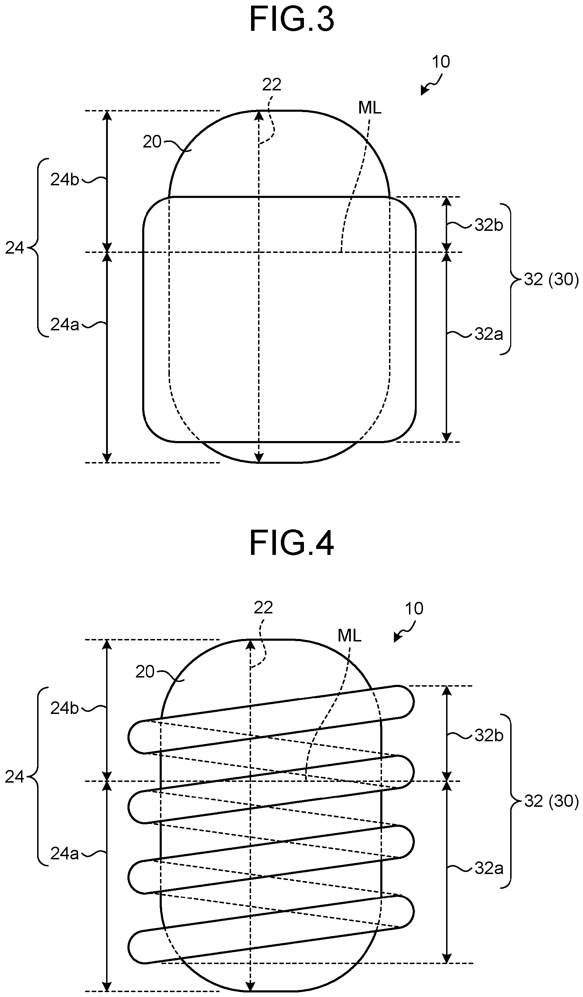

The following describes a configuration of the heat medium storage apparatus 10 according to the third embodiment with reference to FIG. 3. FIG. 3 is a schematic diagram of the configuration of the heat medium storage apparatus 10 according to the third embodiment. Note that descriptions of the same configurations and requirements as those of the first embodiment already described, such as the heat medium tank 20 and the heat medium, are omitted.

As shown in FIG. 3, the heat medium storage apparatus 10 of the third embodiment comprises the heat medium tank 20.

The heat medium tank 20 is a (substantially) cylindrical container that can define the airtight inside space 22 that can contain a certain heat medium and store it for a certain period of time.

In the present embodiment, the heat medium tank 20 is disposed perpendicularly so that the height direction of the cylinder matches the vertical direction. The capacity of the heat medium tank 20 is not limited to a particular capacity, provided that it can contain the heat medium in an amount required by the reactor (the fixed-bed reactor) in which the heat medium storage apparatus 10 is used and can be any suitable capacity.

In the present embodiment, the material of the heat medium tank 20 is not limited to a particular material, provided that it can melt the heat medium through an outer surface 24 of the heat medium tank 20. In the present embodiment, the heat medium tank 20 is preferably formed of, for example, an iron-based material. The iron-based material that can form the heat medium tank 20 may further contain at least one element selected from the group consisting of nickel, chromium, and molybdenum. Specific examples of the iron-based material that can form the heat medium tank 20 may include carbon steel, stainless steel, and hastelloy.

The heat medium storage apparatus 10 comprises the preheating device 30. In the present embodiment, the preheating device 30 is a functional portion that can melt the heat medium to be in liquid form by adjusting its temperature from the outer surface 24 of the heat medium tank 20 without coming into contact with the heat medium in solid form contained in the inside space 22 of the heat medium tank 20.

The preheating device 30 comprises a temperature adjusting portion 32. The present embodiment is a configuration example in which the temperature adjusting portion 32 is a heat medium jacket. That is, in the present embodiment, the temperature adjusting portion 32, which is the heat medium jacket, is provided so as to be in contact with and cover at least part of the outer surface 24 of the heat medium tank 20.

In the present embodiment, the temperature adjusting portion 32, which is the heat medium jacket, is provided so as to extend over a first area 24a and a second area 24b defined by the position (the maximum level ML) of the surface (the liquid level) of the contained heat medium on the outer surface 24 of the heat medium tank 20.

In the present embodiment, more specifically, as shown in FIG. 3, the cylindrical temperature adjusting portion 32 covers the outer surface 24 of the heat medium tank 20 such that both tops thereof in the vertical direction are exposed and is provided so as to cover the boundary (corresponding to the maximum level ML) defined by the position corresponding to the surface (the liquid level) of the contained heat medium, that is, so as to extend over the first area 24a and the second area 24b. Thus, the temperature adjusting portion 32, which is the heat medium jacket, of the present embodiment comprises the first part 32a covering at least part of the first area 24a corresponding to the area in which the heat medium is present and the second part 32b covering at least part of the second area 24b corresponding to the gap area in which the heat medium is not present across the boundary (the maximum level ML).

The temperature adjusting portion 32 is a functional portion that can either heat the heat medium or cool the heat medium. More specifically, the temperature adjusting portion 32 comes into direct contact with the heat medium to, for example, conduct the generated heat to the heat medium in solid form contained and stored in the inside space 22 of the heat medium tank 20 and can thereby melt the heat medium in solid form to be in liquid form.

In the present embodiment, the material forming the temperature adjusting portion 32, which is the heat medium jacket, is not limited to a particular material, provided that it can ensure durability against a heat medium to be circulated inside the heat medium jacket.

The temperature adjusting portion 32, which is the heat medium jacket, is preferably formed of, for example, an iron-based material. The iron-based material that can form the temperature adjusting portion 32 may further contain at least one element selected from the group consisting of nickel, chromium, and molybdenum. Specific examples of the iron-based material that can form the temperature adjusting portion 32 may include carbon steel, stainless steel, and hastelloy.

The temperature adjusting portion 32, which is the heat medium jacket, may include any other conventionally known suitable components such as, for example, a circulation pump and piping, not shown, for circulating the heat medium for the heat medium jacket.

The heat medium for the heat medium jacket for use in the temperature adjusting portion 32, which is the heat medium jacket, is not limited to a particular heat medium. As the heat medium for the heat medium jacket, any conventionally known suitable heat medium that can be used in this technical field can be used. Examples of the heat medium for the heat medium jacket may include vapor, oil heat medium such as silicone oil, and heated air.

When the temperature adjusting portion 32 is configured in this manner, especially even if the heat medium having a smaller volume when being in solid form than a volume when being in liquid form is used, even if the heat medium having been solidified to be in solid form during storage increases in its volume when being melted to be in liquid form, the temperature adjusting portion 32 is provided so as to extend across the boundary (the maximum level ML), and thus pressure that can occur can be released, and consequently damage to the heat medium tank 20 can be effectively prevented.

The shape and the size, that is, the volume, the area, and the like of the temperature adjusting portion 32, which is the heat medium jacket, are not limited to particular ones, provided that, for example, the entire amount of the solidified heat medium stored in the heat medium tank 20 can be melted to be in liquid form within a desired time.

In the present embodiment, the ratio between the volume (the height or the contact area with the outer surface 24) of the first part 32a and the volume (the length or the contact area with the outer surface 24) of the second part 32b of the temperature adjusting portion 32 is not limited to a particular ratio. This ratio is preferably, for example, 10:1 to 100:1, especially when the heat medium in the heat medium tank 20 is contained up to the assumed maximum level ML.

### (iv) Fourth Embodiment

The following describes a configuration of the heat medium storage apparatus 10 according to the fourth embodiment with reference to FIG. 4. FIG. 4 is a schematic diagram of the configuration of the heat medium storage apparatus 10 according to the fourth embodiment. Note that descriptions of the same configurations and requirements as those of the third embodiment already described, such as the heat medium tank 20 and the heat medium contained in the heat medium tank 20, are omitted.

In the fourth embodiment, the temperature adjusting portion 32 extends in a contact manner so as to stretch from the first area 24a corresponding to the area in contact with the heat medium in the inside space 22 to the second area 24b corresponding to the area not in contact with the heat medium in the inside space 22, the areas forming the outer surface 24 of the heat medium tank 20, the first part 32a is provided so as to extend in contact with the first area 24a, and the second part 32b is provided so as to extend in contact with the second area 24b.

In the fourth embodiment, the temperature adjusting portion 32 is configured so as to extend in contact with the outer surface 24 of the heat medium tank 20 so as to be wound in a spiral (coiled) shape in the height direction of the heat medium tank 20 (the vertical direction).

Examples of the temperature adjusting portion 32 of the fourth embodiment may include any conventionally known suitable heater element such as a thermocouple described in the first embodiment and any conventionally known suitable vapor coil described in the second embodiment. Instead of vapor, an oil heat medium such as silicone oil or heated air may be circulated in the vapor coil.

In the present embodiment, as the temperature adjusting portion 32, which is the vapor coil, a water vapor (steam) coil is preferably used.

In the fourth embodiment, either one of or both the manner of extension of the temperature adjusting portion 32 (the direction and spacing of winding and the winding direction with respect to the vertical direction) and the position (the level) of the surface (the liquid level) of the heat medium are adjusted so that at least part of the temperature adjusting portion 32 extending in contact with the outer surface 24 of the heat medium tank 20 stretches from the first are 24a corresponds to the area in contact with the heat medium in the inside space 22 to the second area 24b corresponding to the area not in contact with the heat medium in the inside space 22, the areas forming the outer surface 24 of the heat medium tank 20, or in other words, in the shown example, crosses the surface (the liquid level) of the heat medium corresponding to the maximum level ML, that is, the boundary between the first area 24a (the first part 32a) and the second area 24b (the second part 32b).

When the temperature adjusting portion 32 is configured in this manner, especially even if the heat medium having a smaller volume when being in solid form than a volume when being in liquid form is used, even if the heat medium having been solidified to be in solid form during storage increases in its volume when being melted to be in liquid form, the temperature adjusting portion 32 is provided so as to extend across the boundary (the maximum level ML), and thus pressure that can occur can be released, and consequently damage to the heat medium tank 20 can be effectively prevented.

### (v) Fifth Embodiment

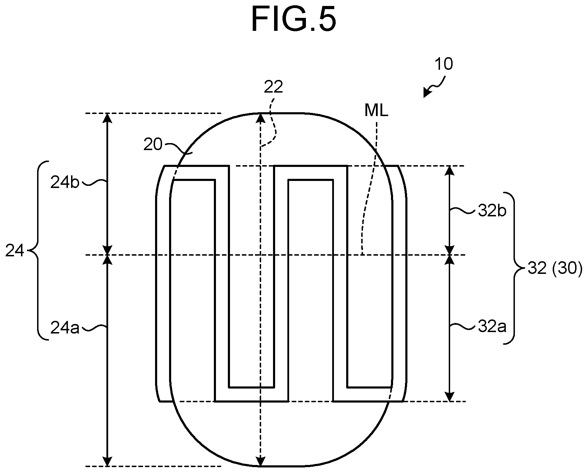

The following describes a configuration of the heat medium storage apparatus 10 according to the fifth embodiment with reference to FIG. 5. FIG. 5 is a schematic diagram of the configuration of the heat medium storage apparatus 10 according to the fifth embodiment.

Note that the fifth embodiment is a configuration example in which only the manner of extension of the temperature adjusting portion 32 in the fourth embodiment is changed. Thus, descriptions of the same configurations and requirements as those of the fourth embodiment and the third embodiment already described, such as the heat medium tank 20 and the heat medium contained in the heat medium tank 20, are omitted.

In the fifth embodiment as well, the temperature adjusting portion 32 extends in a contact manner so as to stretch from the first area 24a corresponding to the area in contact with the heat medium in the inside space 22 to the second area 24b corresponding to the area not in contact with the heat medium in the inside space 22, the areas forming the outer surface 24 of the heat medium tank 20, the first part 32a is provided so as to extend in contact with the first area 24a, and the second part 32b is provided so as to extend in contact with the second area 24b.

In the fifth embodiment, the temperature adjusting portion 32 is configured so as to extend in contact with the outer surface 24 so as to be wound in a serpentine shape in a direction (the horizontal direction) orthogonal to the height direction of the heat medium tank 20 (the vertical direction).

In the fifth embodiment, the temperature adjusting portion 32 specifically may includes, for example, two or more straight long parts extending in the height direction (the vertical direction) and two or more straight short parts extending in the horizontal direction, and two adjacent long parts are integrally joined with one short part to form a substantially U-shaped (channel-shaped) serpentine shape.

As another manner of integrally joining two adjacent long parts with one short part, for example, the short part is formed into a U shape having a certain curvature, and thereby a wavy line shape can be formed as a whole. Without providing the short part, for example, two or more long parts may be alternately arranged in an inclined manner so as to cross the vertical direction with a certain angle to form a zigzag shape (a Z shape).

In the fifth embodiment as well, the temperature adjusting portion 32 is provided so as to stretch from the first area 24a corresponding to the area in contact with the heat medium in the inside space 22 to the second area 24b corresponding to the area not in contact with the heat medium in the inside space 22, the areas forming the outer surface 24 of the heat medium tank 20. In other words, in the fifth embodiment, the long parts, which are at least part of the temperature adjusting portion 32, are provided so as to cross the surface (the liquid level) of the heat medium corresponding to the maximum level ML, that is, the boundary between the first area 24a (the first part 32a) and the second area 24b (the second part 32b).

When the temperature adjusting portion 32 is configured in this manner, especially even if the heat medium having a smaller volume when being in solid form than a volume when being in liquid form is used, even if the heat medium having been solidified to be in solid form during storage increases in its volume when being melted to be in liquid form, the temperature adjusting portion 32 is provided so as to extend across the boundary (the maximum level ML), and thus pressure that can occur can be released, and consequently damage to the heat medium tank 20 can be effectively prevented.

The heat medium storage apparatus 10 according to the third embodiment, the fourth embodiment, and the fifth embodiment corresponds to an embodiment in which the temperature adjusting portion 32 is provided so as to extend in contact with the outer surface 24 of the heat medium tank 20, in which the temperature adjusting portion 32 extends in a contact manner so as to stretch from the first area 24a corresponding to the area in contact with the heat medium in the inside space 22 to the second area 24b corresponding to the area not in contact with the heat medium in the inside space 22, the areas forming the outer surface 24 of the heat medium tank 20, the first part 32a is provided so as to extend in contact with the first area 24a, and the second part 32b is provided so as to extend in contact with the second area 24b.

When the heat medium storage apparatus 10 is configured in this manner, the heat medium and the temperature adjusting portion 32 (the first part 32a) comprised in the preheating device 30 are not in direct contact with each other, and thus in addition to the effects already described, for example, control of the preheating device 30, quality control of the heat medium, and the like are made easier, and the capacity of the heat medium in the heat medium tank 20 can be maximized.

### 2. Fixed-Bed Reactor

A fixed-bed reactor of the present embodiment is a fixed-bed reactor comprising the heat medium storage apparatus 10 having the configuration already described and in which the temperature of the fixed-bed reactor is adjusted by the heat medium supplied from the heat medium storage apparatus 10, especially at the time of the start of the reaction started up from a standstill.

In the present embodiment, the use of the fixed-bed reactor is not limited to a particular use. Examples of the use of the fixed-bed reactor may include production of acrylic acid, production of methacrylic acid, production of chlorine from hydrochloric acid, production of methacrolein, and production of acrolein.

In the present embodiment, the fixed-bed reactor is preferably a fixed-bed reactor configured to produce chlorine from hydrochloric acid.

Here, "producing chlorine from hydrochloric acid" means what is called the "hydrochloric acid oxidation reaction." More specifically, the hydrochloric acid oxidation reaction is a reaction in which a raw material gas containing hydrogen chloride and oxygen is supplied into a reaction tube to oxidize hydrogen chloride with oxygen to produce chlorine. In the hydrochloric acid oxidation reaction, for example, hydrogen chloride secondarily produced in a production process of isocyanates, which are raw materials of urethane, and a production process of organic chlorides such as vinyl chloride and allyl chloride, can be utilized, and the produced chlorine can be further recycled, which can also contribute to a reduction in the load on the environment.

The hydrochloric acid oxidation reaction is an exothermic reaction, with its reaction temperature reaching a maximum of 400°C. In this case, as the heat medium that can be used during the hydrochloric acid oxidation reaction, specifically, for example, a mixture of inorganic salts such as potassium nitrate and sodium nitrite is preferably used. The melting point of the mixture in this case is about 150°C and is in solid form at normal temperature and pressure, that is, when stored by the heat medium storage apparatus 10.

A catalyst that can be used for the hydrochloric acid oxidation reaction may suffer a significant reduction in catalytic activity when exposed to high temperatures. Thus, the fixed-bed reactor comprising the heat medium storage apparatus 10 of the present embodiment is suitably used for the hydrochloric acid oxidation reaction because the catalyst filled inside is not exposed to high temperatures, especially when the reactor is started up from a standstill.

The fixed-bed reactor of the present embodiment is preferably a fixed-bed multi-tube reactor. The following describes a configuration of the fixed-bed multi-tube reactor as an example.

The fixed-bed multi-tube reactor of the present embodiment has any conventionally known suitable configuration except for the heat medium storage apparatus 10 already described. The fixed-bed multi-tube reactor of the present embodiment is preferably, for example, a heat-exchange type fixed-bed reactor having at least a reaction tube, which is a reactor having a catalyst layer inside by being filled with a catalyst and a reactor shell that is disposed so as to surround a plurality of reaction tubes and circulates a heat medium to adjust the temperature inside the reaction tubes.

In the present embodiment, around the reaction tubes forming the reactor of the fixed-bed multi-tube reactor, the reactor shell that is disposed so as to cover each of the reaction tubes and circulates the heat medium inside to adjust the temperature inside the reaction tubes is provided. In the present embodiment, for the configuration of the reactor shell, any conventionally known suitable configuration can be employed.

The reactor shell and the heat medium storage apparatus 10 already described are connected to each other with, for example, piping so that the heat medium can be introduced or derived.

In the present embodiment, the fixed-bed multi-tube reactor comprises any conventionally known suitable temperature control device for adjusting the temperature of the circulating heat medium to a certain temperature during operation (during the reaction) and any conventionally known suitable circulation pump for circulating the heat medium inside the reactor shell to exchange the heat medium with an external temperature adjusting device or to exchange the heat medium between the reactor shell and the heat medium storage apparatus 10.

The temperature adjusting device may be either a cooling device or a heating device, and a device having any conventionally known suitable device can be used corresponding to the reaction temperature and the type of the heat medium to be used.

The heat medium for adjusting the temperature of the reactor is delivered from the reactor shell to the heat medium tank 20 of the heat medium storage apparatus 10 and is stored when the fixed-bed multi-tube reactor is in a standstill, and when, for example, the heat medium is required to be removed from the reactor shell during a regular inspection or the like. On the other hand, in starting up the fixed-bed multi-tube reactor from a standstill of the reaction to start the reaction, the heat medium having been stored in solid form is adjusted in temperature by the temperature adjusting portion 32 comprised in the preheating device 30 of the heat medium storage apparatus 10 and is melted to be in liquid form to be delivered to the reactor shell.

By the fixed-bed multi-tube reactor having the reactor shell as described above, the temperature-controlled heat medium is circulated inside the reactor shell, and the temperature inside the reactor can be adjusted to a desired temperature. Consequently, the reaction heat generated by the hydrochloric acid oxidation reaction is removed, the hydrochloric acid oxidation reaction can be effectively controlled, and the degradation of the catalyst can be prevented, and thus production efficiency can be improved.

### 3. Method for Using Fixed-Bed Reactor (Method for Producing Chlorine to Produce Oxygen from Hydrochloric Acid)

Moreover, the present invention relates to a method for using a fixed-bed reactor comprising the heat medium storage apparatus 10 already described, and more specifically, a method for producing chlorine to produce oxygen from hydrochloric acid by using the fixed-bed reactor.

The method for using a fixed-bed reactor and the method for producing chlorine to produce oxygen from hydrochloric acid of the present embodiment comprising:
containing the heat medium in liquid form drained from the fixed-bed reactor in the heat medium tank 20 of the heat medium storage apparatus 10;
storing the heat medium, the heat medium being contained in the heat medium tank 20, when the temperature adjusting portion 32 is provided so as to extend in the inside space 22, such that the first part 32a is in contact with the heat medium so as to be covered with the heat medium and the second part 32b protrudes into the gap area in which the heat medium is absent in the inside space 22 and thereby the second part 32b is exposed, or storing the heat medium, when the temperature adjusting portion 32 is provided so as to extend in contact with the outer surface 24 of heat medium tank 20, such that the first part 32a extends in contact with the first area 24a and the second part 32b extends in contact with the second area 24b;
melting the heat medium in solid form contained in the heat medium tank 20 by functioning the temperature adjusting portion 32 of the preheating device 30; and
transferring the melted heat medium in liquid form to the fixed-bed reactor to adjust the temperature of the reactor by the heat medium.

The method for using a fixed-bed reactor and the chlorine producing method of the present embodiment are assumed to be performed at a stage of stopping the reaction by the fixed-bed reactor, especially when a regular inspection or the like is scheduled, and the heat medium is required to be drained and removed out of the fixed-bed reactor.

In the method for using a fixed-bed reactor of the present embodiment, the fixed-bed reactor is preferably a fixed-bed multi-tube reactor, and the fixed-bed reactor is more preferably a fixed-bed reactor for producing chlorine from hydrochloric acid. The following describes each of the steps.
(i) The step of containing the heat medium in liquid form drained from the fixed-bed reactor in the heat medium tank 20 of the heat medium storage apparatus 10
   When the heat medium in solid form during storage, which is at normal temperature and pressure, is used, this step may be a step of using a circulating pump or another pump in addition to piping while the heat medium is in liquid form after stopping the reaction or, when the fixed-bed reactor is present at a higher position than the heat medium tank, draining the heat medium in liquid form out of the fixed-bed reactor using gravity, delivering it to the heat medium tank 20, and containing it in the heat medium tank 20.
(ii) The step of storing the heat medium, the heat medium being contained in the heat medium tank 20, when the temperature adjusting portion 32 is provided so as to extend in the inside space 22, such that the first part 32a is in contact with the heat medium so as to be covered with the heat medium and the second part 32b protrudes into the gap area in which the heat medium is absent in the inside space 22 and thereby the second part 32b is exposed, or storing the heat medium, when the temperature adjusting portion 32 is provided so as to extend in contact with the outer surface 24 of the heat medium tank 20, such that the first part 32a extends in contact with the first area 24a and the second part 32b extends in contact with the second area 24b

This step is a step of storing the heat medium collected from the fixed-bed reactor and contained in the heat medium tank 20 of the heat medium storage apparatus 10. This step can be usually performed at normal temperature and pressure. However, this step can also be performed by changing the conditions such as temperature, atmosphere, and pressure to any suitable conditions corresponding to the selected heat medium as appropriate from the viewpoint of preventing the degradation of the properties or the like of the heat medium.

In storing the heat medium by this step, when the temperature adjusting portion 32 is provided so as to extend in the inside space 22, the contained heat medium is stored so as to cover and be in contact with the first part 32a of the temperature adjusting portion 32, that is, when the heat medium is in liquid form, such that the first part 32a is immersed in the heat medium in liquid form and the second part 32b protrudes from the surface (the liquid level) of the heat medium in liquid form, and when the heat medium is in solid form, such that the first part 32a is embedded in the heat medium in solid form and the second part 32b protrudes from the surface of the heat medium in solid form and is consequently stored such that the second part 32b protrudes into the gap area in which the heat medium having been in solid form is absent and is exposed.

To store the heat medium in such a manner, for example, the shape and the capacity of the heat medium tank 20 and the shape, the size, and the like of the temperature adjusting portion 32 of the preheating device 10 may be determined taking into account the expansion rate and the contraction rate of the heat medium and the capacity of the heat medium in the reactor shell (the amount of the heat medium used).

In storing the heat medium by this step, when the temperature adjusting portion 32 is provided so as to extend in contact with the outer surface 24 of the heat medium tank 20, the heat medium is stored such that the temperature adjusting portion 32 is not in contact with the heat medium contained in the heat medium tank 20 and the temperature adjusting portion 32 stretches from the first area 24a corresponding to the area in contact with the heat medium in the inside space 22 to the second area 24b corresponding to the area not in contact with the heat medium in the inside space 22, the areas forming the outer surface 24 of the heat medium tank 20.

To store the heat medium in such a manner, for example, the shape and the capacity of the heat medium tank 20 may be determined as appropriate taking into account the expansion rate and the contraction rate of the heat medium and the capacity of the heat medium in the reactor shell (the amount of the heat medium used). Since the heat medium and the temperature adjusting portion 32 are not in direct contact with each other in such a manner, the manner of extension, the size, and the like of the temperature adjusting portion 32 may be determined such that the heat medium contained in the heat medium tank 20 can be melted with temperature adjustment performed sufficiently and efficiently.

Specifically, at the maximum level ML at the maximum capacity of the heat medium set in the heat medium tank 20, the ratio between the volume (the length or the contact area with the outer surface 24) of the first part 32a and the volume (the length or the contact area with the outer surface 24) of the second part 32b is preferably set to about 10:1 to 100:1.

### (iii) The step of melting the heat medium in solid form contained in the heat medium tank 20 by functioning the temperature adjusting portion 32 of the preheating device 30

This step is a step performed as a preparation for starting up the fixed-bed reactor again to start the reaction after the heat medium is drained from the fixed-bed reactor and a regular inspection or the like is performed.

Specifically, the temperature adjusting portion 32 of the preheating device 30 comprised in the heat medium storage apparatus 10 is started up under the control of the controller 34 to melt the heat medium having been in solid form.

At this time, even if the heat medium having been solidified to be in solid form increases in its volume when being melted to be in liquid form, the second part 32b protrudes into the gap area or the temperature adjusting portion 32 stretches from the first area 24a to the second area 24b of the outer surface 24 of the heat medium tank 20, and thus pressure that can occur when the heat medium is melted can be released to the gap area in which the heat medium is not present, and thus no unexpected pressure is applied to part of the heat medium tank 20.

### (iv) The step of transferring the melted heat medium in liquid form to the fixed-bed reactor to adjust the temperature of the reactor by the heat medium

This step is a step of delivering the heat medium in liquid form melted as described from the heat medium tank 20 to the fixed-bed reactor using a circulation pump, another pump, and piping to start adjustment of the temperature of the reactor comprised in the fixed-bed reactor.

By performing the above steps, the temperature of the reactor comprised in the fixed-bed reactor can be adjusted, and the reaction by the catalyst filled in the reactor can be started.

According to the method for using a fixed-bed reactor, and thus the chlorine producing method of the present embodiment, especially when the heat medium having a smaller volume in solid form than a volume in liquid form is used, even if the heat medium having been solidified to be in solid form during storage increases in its volume when being melted to be in liquid form, the second part 32b protrudes into the gap area or the temperature adjusting portion 32 stretches from the first area 24a to the second area 24b of the outer surface 24 of the heat medium tank 20, and thus pressure that can occur can be released. Consequently, damage to the heat medium tank 20, and thus loss of functions of the heat medium storage apparatus 10 can be effectively prevented, and the fixed-bed reactor can be started up from a standstill and operated without degrading the catalyst filled in the reactor.

### EXPLANATIONS OF LETTERS OR NUMERALS

- 10: HEAT MEDIUM STORAGE APPARATUS

- 20: HEAT MEDIUM TANK
- 22: INSIDE SPACE
- 24: OUTER SURFACE
- 24a: FIRST AREA
- 24b: SECOND AREA
- 30: PREHEATING DEVICE
- 32: TEMPERATURE ADJUSTING PORTION
- 32a: FIRST PART
- 32b: SECOND PART
- 34: CONTROLLER
- ML: MAXIMUM LEVEL

## Claims

1. A heat medium storage apparatus comprising:
a heat medium tank defining an airtight inside space in which a heat medium having a smaller volume when being in solid form than a volume when being in liquid form is contained; and
a preheating device comprising a temperature adjusting portion capable of melting the heat medium in solid form contained in the inside space, wherein
at least the temperature adjusting portion of the preheating device is provided so as to extend in the inside space or being provided so as to extend in contact with an outer surface of the heat medium tank,
the temperature adjusting portion has a first part and a second part formed continuously and integrally with the first part,
when the temperature adjusting portion is provided so as to extend in the inside space, the first part is in contact with the heat medium so as to be covered with the heat medium, and the second part is provided so as to protrude into a gap area in which the heat medium is absent in the inside space and thereby the second part is exposed, and
when the temperature adjusting portion is provided so as to extend in contact with the outer surface of the heat medium tank, the temperature adjusting portion extends in a contact manner so as to stretch from a first area corresponding to an area in contact with the heat medium in the inside space to a second area corresponding to an area not in contact with the heat medium in the inside space, the areas forming the outer surface of the heat medium tank, the first part being provided so as to extend in contact with the first area, the second part being provided so as to extend in contact with the second area.

2. The heat medium storage apparatus according to claim 1, wherein a ratio between a volume of the first part and a volume of the second part is 1:10 to 100:1.

3. The heat medium storage apparatus according to claim 1, wherein the heat medium comprises a molten salt.

4. The heat medium storage apparatus according to claim 3, wherein the molten salt comprises one or two or more selected from the group consisting of potassium nitrate, sodium nitrite, and sodium nitrate.

5. A fixed-bed reactor comprising the heat medium storage apparatus according to any one of claims 1 to 4, wherein
a temperature of the reactor is adjusted by the heat medium supplied from the heat medium storage apparatus.

6. The fixed-bed reactor according to claim 5, wherein the fixed-bed reactor is a fixed-bed multi-tube reactor.

7. The fixed-bed reactor according to claim 6, wherein the fixed-bed reactor is a fixed-bed reactor configured to produce chlorine from hydrochloric acid.

8. A method for using the fixed-bed reactor according to claim 5, comprising:
containing the heat medium in liquid form drained from the fixed-bed reactor in the heat medium tank of the heat medium storage apparatus;
storing the heat medium, the heat medium being contained in the heat medium tank, when the temperature adjusting portion is provided so as to extend in the inside space, such that the first part is in contact with the heat medium so as to be covered with the heat medium and the second part protrudes into the gap area in which the heat medium is absent in the inside space and thereby the second part is exposed, or storing the heat medium, when the temperature adjusting portion is provided so as to extend in contact with the outer surface of heat medium tank, such that the first part extends in contact with the first area and the second part extends in contact with the second area;
melting the heat medium in solid form contained in the heat medium tank by functioning the temperature adjusting portion of the preheating device; and
transferring the melted heat medium in liquid form to the fixed-bed reactor to adjust the temperature of the reactor by the heat medium.

9. A chlorine producing method for producing chlorine from hydrochloric acid using the fixed-bed reactor according to claim 5, comprising:
containing the heat medium in liquid form drained from the fixed-bed reactor in the heat medium tank of the heat medium storage apparatus;
storing the heat medium, the heat medium being contained in the heat medium tank, when the temperature adjusting portion is provided so as to extend in the inside space, such that the first part is in contact with the heat medium so as to be covered with the heat medium and the second part protrudes into the gap area in which the heat medium is absent in the inside space and thereby the second part is exposed, or storing the heat medium, when the temperature adjusting portion is provided so as to extend in contact with the outer surface of heat medium tank, such that the first part extends in contact with the first area and the second part extends in contact with the second area;
storing the heat medium, the heat medium being contained in the heat medium tank, such that the heat medium in solid form covers and is in contact with the first part of the temperature adjusting portion and the second part protrudes into the gap area in which the heat medium in solid form is absent and thereby the second part is exposed;
melting the heat medium in solid form contained in the heat medium tank by functioning the preheating device; and
transferring the melted heat medium in liquid form to the fixed-bed reactor to adjust the temperature of the reactor by the heat medium.
